# EUROPÄISCHE PATENTSCHRIFT

(11) **EP 2 460 261 B1**
(45) Veröffentlichungstag und Bekanntmachung des Hinweises auf die Patenterteilung: **10.05.2017**
(21) Anmeldenummer: 10736712.0
(22) Anmeldetag: 23.07.2010
(51) Int. Cl.: H02K 23/08

(54) **REIHENSCHLUSSMOTOR MIT PERMANENTMAGNET**
SERIES MOTOR HAVING A PERMANENT MAGNET
MOTEUR SÉRIE À AIMANT PERMANENT

(30) Priorität: 31.07.2009 DE 102009037114
(43) Veröffentlichungstag der Anmeldung: 06.06.2012
(73) Patentinhaber: C. & E. Fein GmbH, 73529 Schwäbisch Gmünd-Bargau (DE)
(72) Erfinder: DIETL, Lothar, 73431 Aalen (DE)
(74) Vertreter: Witte, Weller & Partner Patentanwälte mbB
(86) Internationale Anmeldenummer: PCT/EP2010/060742
(87) Internationale Veröffentlichungsnummer: WO 2011/012551

(56) Entgegenhaltungen:
- EP-A2- 0 266 672
- EP-A2- 0 673 105
- DE-A1- 2 305 146
- GB-A- 2 241 119
- US-A- 3 201 625

## Beschreibung

Die Erfindung betrifft einen Reihenschlussmotor mit einem Stator und einem Anker, mit mindestens einer Feldwicklung, die mit einer Ankerwicklung in Reihe geschaltet ist, und mit mindestens einem Permanentmagnet, dessen Magnetfeld dem durch die mindestens eine Feldwicklung erzeugten Hauptfeld überlagert ist.

Es ist im Stand der Technik grundsätzlich bekannt (vgl. DD 109 775, DD 145 590, DE-PS 1 181 309, EP 0 582 416 B1) bei durch Permanentmagnete erregten Gleichstrommotoren eine Hilfsreihenschlusswicklung vorzusehen, um eine Entmagnetisierung des Motors durch die Ankerrückwirkung zu verhindern.

Ferner ist durch die DE 37 29 680 A1 ein Reihenschluss-Permanentmagnet-Motor bekannt, der Wendepole mit zweiteiligen Wendepol-Kompensationswicklungen für jeden Wendepol besitzt, wodurch der Wirkungsgrad der Wendepole verbessert werden soll und eine Entmagnetisierung der Permanentmagnete durch die Ankerrückwirkung verhindert werden soll.

Ferner ist aus der EP 0 615 331 A1 ein Reihenschlussmotor in Form eines Universalmotors mit einer Bremseinrichtung bekannt, bei dem eine selbsterregte Bremsung durch die Verwendung eines Permanentmagneten zuverlässig eingeleitet werden soll. Dabei wird im Motorbetrieb über die Feldwicklungen ein Betriebsfeld erzeugt, das gemeinsam mit einem sich einstellenden Ankerfeld ein für den Motorbetrieb erforderliches resultierendes Feld ergibt. Bei Umschaltung in den Bremsbetrieb wird der Motor vom Netz getrennt und die Feldwicklungen über den Anker kurzgeschlossen. Um eine zuverlässige Einleitung der Bremsung durch Selbsterregung zu gewährleisten, ist am Polschuhblechpaket zusätzlich ein Permanentmagnet in einer Nut angeordnet, und zwar derart, dass ein magnetisches Feld in der gleichen Richtung wie die Feldlinien des elektrisch erregten Hauptflusses wirkt. Die Stärke des Permanentmagneten ist so bemessen, dass sein Feld mindestens doppelt so hoch ist wie das Feld infolge der Remanenzinduktion im Eisen des Polschuhblechpakets. Dadurch wird erreicht, dass auch in dem Fall, dass die Remanenzinduktion im Umschaltzeitpunkt vom Motorbetrieb in den Generatorbetrieb gegen das Feld des Permanentmagneten wirkt, genügend Überschuss des Permanentmagnetfeldes vorhanden ist, um eine Selbsterregung zuverlässig einzuleiten. Damit der Permanentmagnet beim Anlaufen des Motors nicht entmagnetisiert wird, ist entweder ein Anlaufwiderstand vorgesehen oder eine Diode, so dass der Anlaufstrom zunächst nur in einer Richtung fließen kann, bis nach einer gewissen Einschaltverzögerung die Diode überbrückt wird, so dass der Motor dann unmittelbar aus dem Wechselstromnetz mit Strom versorgt wird.

Reihenschlussmotoren werden insbesondere in Form von Universalmotoren bei zahlreichen Anwendungen, insbesondere in Elektrowerkzeugen, eingesetzt. Reihenschlussmotoren besitzen allerdings den Nachteil, dass die (ungeregelte) Leerlaufdrehzahl deutlich höher liegt als die (ungeregelte) Nenndrehzahl im Lastbetrieb. Dies bedeutet, dass die Drehzahl-Drehmoment-Charakteristik relativ steil ist, dass die Drehzahl also relativ stark vom Drehmoment abhängig ist. Dies hat zur Folge, dass der Einsatz von Reihenschlussmotoren bei solchen Anwendungen problematisch ist, bei denen die (ungeregelte) Leerlaufdrehzahl begrenzt werden muss, z.B. aus Sicherheitsgründen.

Aus der EP 0 673 105 A2 ist ein Elektromotor in Form eines Universalmotors bekannt, bei dem in den Polen jeweils ein kleiner Schlitz vorgesehen ist, in dem ein Permanentmagnet aufgenommen ist.

Durch die Verwendung der Permanentmagnete soll das Bremsverhalten des Motors bei einem dynamischen Bremsen verbessert werden.

Aus der US 3 201 625 A ist ferner eine dynamoelektrische Maschine gemäß dem Oberbegriff von Anspruch 1 bekannt, bei der an den Polen jeweils ein kleiner Permanentmagnet vorgesehen ist, durch den das Verhalten der Maschine verbessert werden soll und eine Begrenzung der Leerlaufdrehzahl erreicht werden soll.

Der Erfindung liegt vor diesem Hintergrund die Aufgabe zugrunde, einen Reihenschlussmotor anzugeben, der im Vergleich zu herkömmlichen Reihenschlussmotoren eine verbesserte Drehzahl-Drehmoment-Charakteristik aufweist und der insbesondere eine verbesserte Kommutierung aufweist.

Diese Aufgabe wird durch einen Reihenschlussmotor gemäß Anspruch 1 gelöst.

Die Aufgabe der Erfindung wird auf diese Weise vollkommen gelöst. Durch die dauerhafte Überlagerung eines Permanentmagnetfeldes mit dem durch die mindestens eine Feldwicklung erzeugten Hauptfeld verstärkt sich das Erregerfeld insbesondere bei schwacher elektrischer Erregung im Leerlauf, was zu einer Verringerung der Leerlaufdrehzahl führt. Bei Belastung des Motors wird die elektrische Erregung dann größer, während die Erregung durch den Permanentmagnet gleich bleibt. Die Nenndrehzahl wird sich also weniger stark als die Leerlaufdrehzahl absenken. Damit ergibt sich eine flachere Drehzahl-Drehmoment-Charakteristik, also eine weniger starke Abhängigkeit der Drehzahl vom Drehmoment. Da die Permanentmagnete asymmetrisch an den Polschuhen angeordnet sind, wird eine verbesserte Kommutierung erreicht, wenn der Motor mit einer Vorzugsrichtung betrieben wird.

In bevorzugter Ausgestaltung der Erfindung ist der mindestens eine Permanentmagnet in einer Nut eines Polschuhs aufgenommen.

Hierdurch ist eine einfache Montage und sichere Befestigung gewährleistet.

In alternativer Ausführung ist der mindestens eine Permamentmagnet an der Innenoberfläche eines Polschuhs aufgenommen. Es handelt sich hierbei bevorzugt um eine sehr flache Ausführung (etwa 0,3 bis 2 mm) und vorzugsweise eine Befestigung durch Verkleben.

In beiden Fällen weist der Permanentmagnet vorzugsweis eine derart hohe Feldstärke auf, dass eine durch die Anordnung des Permanentmagneten verursachte Feldschwächung zumindest ausgeglichen wird.

Die Anbringung einer Nut an einem Polschuh wirkt wie ein Luftspalt und führt zunächst zu einer Feldschwächung. Diese Feldschwächung kann durch das überlagerte Feld des Permanentmagneten ausgeglichen oder sogar überkompensiert werden, wenn dieser eine ausreichend hohe Feldstärke aufweist.

Hierzu besteht der Permanentmagnet vorzugsweise aus einem Seltenerdwerkstoff. Derartige Permanentmagnete bestehen beispielsweise aus einem Kobalt-Samarium-Werkstoff oder aus Neodym-Eisen-Bor-Werkstoffen. Sie weisen eine hohe Remanenzinduktion und hohe Koerzitivfeldstärke auf und besitzen eine sehr große spezifische magnetische Energie. Solche Permanentmagnete aus einem Seltenerdwerkstoff sind besonders zum Einsatz bei der Erfindung geeignet, da hierdurch eine durch die Nut verursachte Feldschwächung sogar überkompensiert werden kann.

Gemäß einer weiteren Ausführung der Erfindung weist der Stator mindestens zwei Polschuhe auf, an denen jeweils mindestens eine Nut vorgesehen ist, in der ein Permanentmagnet aufgenommen ist.

Gemäß einer weiteren Ausgestaltung der Erfindung ist der zumindest eine Permanentmagnet in die Nut in Axialrichtung einschiebbar.

Hierdurch ist eine erleichterte Montage ermöglicht. Durch eine geeignete Anpassung der Form der Nut und der Form des Permanentmagneten, z.B. in Form einer Schwalbenschwanzführung, kann hierbei gleichzeitig eine formschlüssige Festlegung erreicht werden.

Gemäß einer weiteren Ausgestaltung der Erfindung erstreckt sich der zumindest eine Permanentmagnet über die gesamte axiale Länge eines zugeordneten Polschuhs.

Alternativ kann sich der zumindest eine Permanentmagnet auch nur über einen Teil der axialen Länge eines zugeordneten Polschuhs erstrecken.

Um dauerhaft eine konstruktive Überlagerung der Magnetfelder von Feldwicklung und Permanentmagnet zu gewährleisten, muss der Permanentmagnet entsprechend der Richtung des Hauptfeldes ausgerichtet werden. Hierzu ist es bei Anschluss an das Wechselstromnetz notwendig, die Wechselspannung über einen Gleichrichter, vorzugsweise einen Brückengleichrichter, in eine gleichgerichtete (ggf. geglättete) Wechselspannung zu wandeln, über die Feldspule(n) und Anker mit Strom versorgt werden. Alternativ kann natürlich ein Betrieb unmittelbar mit Gleichspannung erfolgen. Durch eine Diode kann die korrekte Polung in jedem Falle sicher gestellt werden, damit eine konstruktive Überlagerung von Hauptfeld und Permanentmagnetfeld gewährleistet ist.

Gemäß einer weiteren Ausgestaltung der Erfindung ist die Polarität der Feldwicklungen umschaltbar.

Hierdurch kann eine destruktive Überlagerung von Feldwicklung und Permanentmagnet erreicht werden, wodurch sich eine Feldschwächung ergibt. Dies führt zu einer besonders hohen Drehzahl, was für Sonderanwendungen vorteilhaft sein kann.

Durch die Erfindung wird ferner ein Elektrowerkzeug mit einem Reihenschlussmotor angegeben, bei dem der Reihenschlussmotor derart ausgelegt ist, dass eine Begrenzung der Leerlaufdrehzahl auf einen zulässigen Maximalwert gewährleistet ist.

Dies ist insbesondere für solche Anwendungen von Vorteil, bei denen die (ungeregelte) Leerlaufdrehzahl begrenzt werden muss. So können die konstruktionsbedingten Nachteile von Universalmotoren, die zu einer hohen Leerlaufdrehzahl im Vergleich zur Lastdrehzahl führen, zumindest zum Teil ausgeglichen werden.

Gemäß einer Weiterbildung dieser Ausführung wird eine durch den mindestens einen Permanentmagneten verursachte Abflachung der Drehzahl-Drehmoment-Charakteristik im Vergleich zum Reihenschlussmotor ohne Permanentmagneten durch eine Anpassung der Wicklungen zu einer Anhebung des Drehmomentes im Arbeitsbereich bei gleichzeitiger Absenkung der Leerlaufdrehzahl auf einen zulässigen Wert genutzt.

Durch die geänderte Motorwicklung ergibt sich im Vergleich zum selben Motor ohne Permanentmagneten eine höhere Nenndrehzahl bei gleichem Drehmoment. Dadurch ist eine höhere Getriebeuntersetzung möglich, womit ein größeres Drehmoment erreicht wird. Alternativ kann bei gleicher Drehzahl ein größeres Drehmoment erreicht werden.

Bei unveränderter Wicklung wird dagegen die Nenndrehzahl im Wesentlichen beibehalten, wodurch sich die Leerlaufdrehzahl im Vergleich zum selben Motor ohne Permanentmagneten verringert. Hierdurch kann die Leerlaufdrehzahl auf einen zulässigen Maximalwert begrenzt werden. Dies ist insbesondere bei einer Ausführung des Elektrowerkzeuges als Winkelschleifer von Bedeutung, da bei Ausfall der Motorelektronik gewährleistet sein muss, dass der Winkelschleifer im Leerlauf nicht zu schnell läuft. Die Umfangsgeschwindigkeit der Schleifscheibe muss bei einem Winkelschleifer auf maximal 80 m/s begrenzt werden, um ein Platzen der Schleifscheibe mit Sicherheit zu verhindern.

Die erfindungsgemäß verbesserte Drehzahl-Drehmoment-Charakteristik kann somit insbesondere vorteilhaft bei Winkelschleifern genutzt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: ein Schaltbild einer ersten Ausführung eines erfindungsgemäßen Reihenschlussmotors;
- Fig. 2: ein Schaltbild einer zweiten Ausführung eines Reihenschlussmotors mit Drehrichtungsumkehr, der nicht von der Erfindung umfasst ist;
- Fig.3: den Vergleich verschiedener Drehzahl-Drehmoment-Charakteristiken eines herkömmlichen Reihenschlussmotors mit zwei verschieden ausgelegten erfindungsgemäßen Reihenschlussmotoren;
- Fig. 4: eine nicht von der Erfindung umfasste Ausführung eines Stators mit je zwei Permanentmagneten an jedem Polschuh, die in symmetrischer Anordnung in Nuten des Polschuhs aufgenommen sind;
- Fig. 5: eine nicht von der Erfindung umfasste abgewandelte Ausführung des Stators gemäß Fig. 4 mit je einem Permanentmagneten, der sich über einen größeren Bereich des Polschuhs in Umfangsrichtung erstreckt, in symmetrischer Anordnung;
- Fig. 6: eine Ausführung eines erfindungsgemäßen Stators mit asymmetrischer Anordnung zweier Permanentmagnete, die gegenüber einer mittigen Anordnung in Richtung auf die auflaufende Kante der beiden Polschuhe verschoben sind; und
- Fig. 7: eine schematische Darstellung eines Elektrowerkzeuges in Form eines Winkelschleifers mit einem erfindungsgemäßen Reihenschlussmotor.

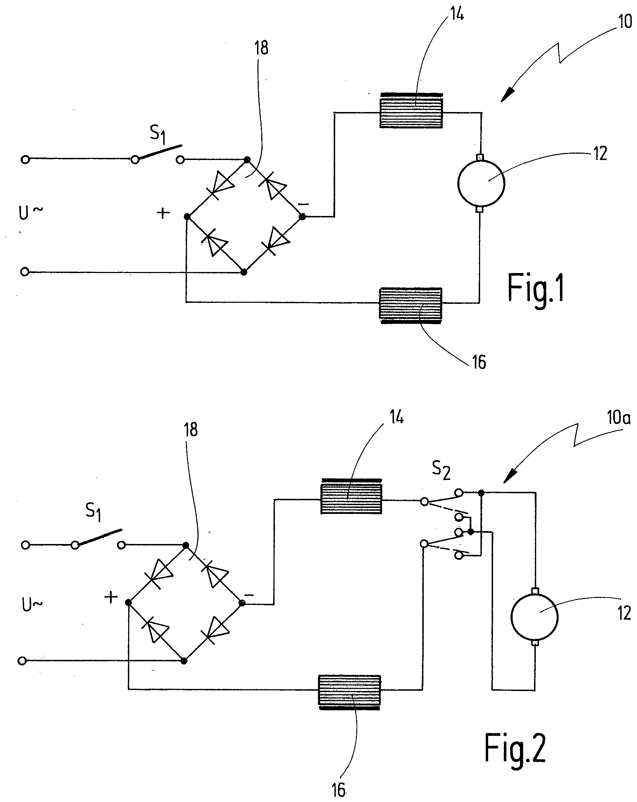

In Fig. 1 ist eine Schaltung eines erfindungsgemäßen Reihenschlussmotors dargestellt, der insgesamt mit 10 bezeichnet ist.

Der Reihenschlussmotor 10 weist einen Anker 12 mit einer Ankerwicklung auf, die mit zwei Feldwicklungen 14, 16 in Reihe geschaltet ist. Der Motor wird aus einer Wechselspannungsquelle U∼ (z.B. 230 V, 50 Hz) mit Wechselstrom versorgt. Zum Ein- und Ausschalten dient ein Motorschalter S₁. Über einen Gleichrichter 18 in Form eines Brückengleichrichters wird die Wechselspannung gleichgerichtet, so dass diese als pulsierende Gleichspannung zugeführt wird. Der Brückengleichrichter kann ferner Mittel zur Glättung umfassen (z.B. einen Kondensator, nicht dargestellt). Zusätzlich zu den beiden Feldwicklungen 14, 16, über die die Haupterregung erfolgt, weist der Reihenschlussmotor 10 Permanentmagnete auf, die jeweils in eine flache Nut eines Polschuhs eingelassen sind.

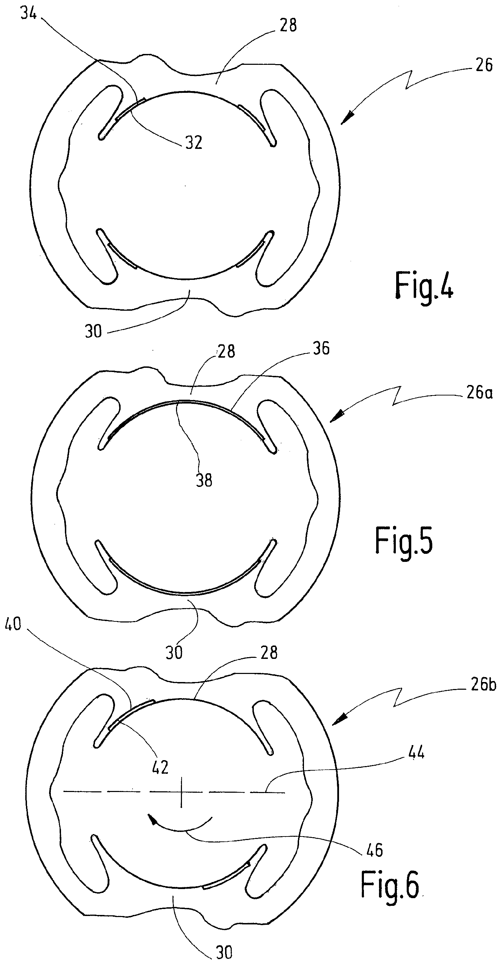

Verschiedene mögliche Anordnungen der Permanentmagnete am Stator 26 werden im Folgenden anhand der Figuren 4 bis 6 kurz erläutert.

Der Stator 26 gemäß der Fig. 4-6 ist im Querschnitt dargestellt. Aus Gründen der Übersichtlichkeit wurde auf die Darstellung der Feldwicklungen und des Ankers verzichtet. Der Stator 26 weist zwei Polschuhe 28, 30 auf. An jedem Polschuh 28, 30 sind in symmetrischer Anordnung in Umfangsrichtung gesehen in der Nähe des Polschuhendes zwei flache Nuten 32 vorgesehen, in denen jeweils ein Permanentmagnet 34 aufgenommen ist. Die jeweilige Nut 32 weist nur eine geringe Tiefe von z.B. 0,3 bis 1 mm auf und kann vorzugsweise so gestaltet sein, dass sich eine formschlüssige Festlegung des jeweiligen Permanentmagneten 34 an der zugeordneten Nut 32 ergibt. Die Nut 32 mündet in Radialrichtung gesehen an der Polschuhinnenfläche aus. Die jeweilige Nut 32 erstreckt sich über die gesamte axiale Länge des Stators 26, so dass der Permanentmagnet 34 von einem axialen Ende her in die Nut 32 eingeschoben und so leicht montiert werden kann. Die insgesamt vier Permanentmagnete 34 sind symmetrisch angeordnet, so dass der betreffende Reihenschlussmotor 10 für eine Drehrichtungsumkehr geeignet ist. Alternativ könnten sich die Permanentmagnete 34 nur jeweils über einen Teil der axialen Länge der jeweiligen Polschuhe 28, 30 erstrecken.

Fig. 5 zeigt eine nicht von der Erfindung umfasste Abwandlung des Stators, der hier insgesamt mit 26a bezeichnet ist. In Abwandlung zur Ausführung gemäß Fig. 4 ist an jedem Polschuh 28, 30 nur eine zentrale Nut 36 vorgesehen, die sich in Umfangsrichtung des Polschuhs 28, 30 gesehen über den größten Bereich des Polschuhs 28 bzw. 30 erstreckt. In dieser Nut 36 ist ein entsprechend geformter Permanentmagnet 38 aufgenommen. Auch am gegenüberliegenden Polschuh 30 ist eine Nut gleicher Größe und Anordnung mit einem entsprechenden Permanentmagneten vorgesehen, so dass sich insgesamt wiederum eine symmetrische Anordnung ergibt.

Eine erfindungsgemäße Ausführung des Stators ist in Fig. 6 dargestellt und insgesamt mit 26b bezeichnet. Hier ist die Anordnung der Permanentmagnete 42 asymmetrisch, was vorteilhaft für einen Motor mit Vorzugsrichtung ist, da sich hierdurch eine verbesserte Kommutierung erzielen lässt. An jedem Polschuh 28, 30 ist eine Nut 40 mit zugeordnetem Permanentmagnet 42 vorgesehen, jedoch sind hierbei die Permanentmagnete 40 von der neutralen Zone 44 entgegen der Drehrichtung des Ankers 12 verlagert. Die Drehrichtung des Reihenschlussmotors ist in Fig. 6 mit 46 bezeichnet.

Durch die Anordnung von Permanentmagneten unmittelbar in einer Nut jeweils direkt unter dem Polschuh ergibt sich zunächst ein zusätzlicher Luftspalt, was zu einer Feldschwächung des durch die Feldwicklungen 14, 16 erzeugten Hauptfeldes führt. Da die Permanentmagnete aus einem Seltenerdmagnetwerkstoff bestehen, weisen diese eine sehr hohe Feldstärke, eine hohe Remanenzinduktion und eine hohe Koerzitivfeldstärke auf. Somit kann die durch die Nut bedingte Feldschwächung überkompensiert werden, so dass sich insgesamt bei konstruktiver Überlagerung der Magnetfelder der Permanentmagnete 34, 38, 42 und des von den Feldwicklungen 14, 16 erzeugten Hauptfeldes ein verstärktes Gesamtfeld ergibt. Hierbei ist die Stromrichtung durch die Feldwicklungen 14, 16 derart gewählt, dass die Felder der Permanentmagnete 34, 38, 42 und das Hauptfeld gleiche Polarität haben.

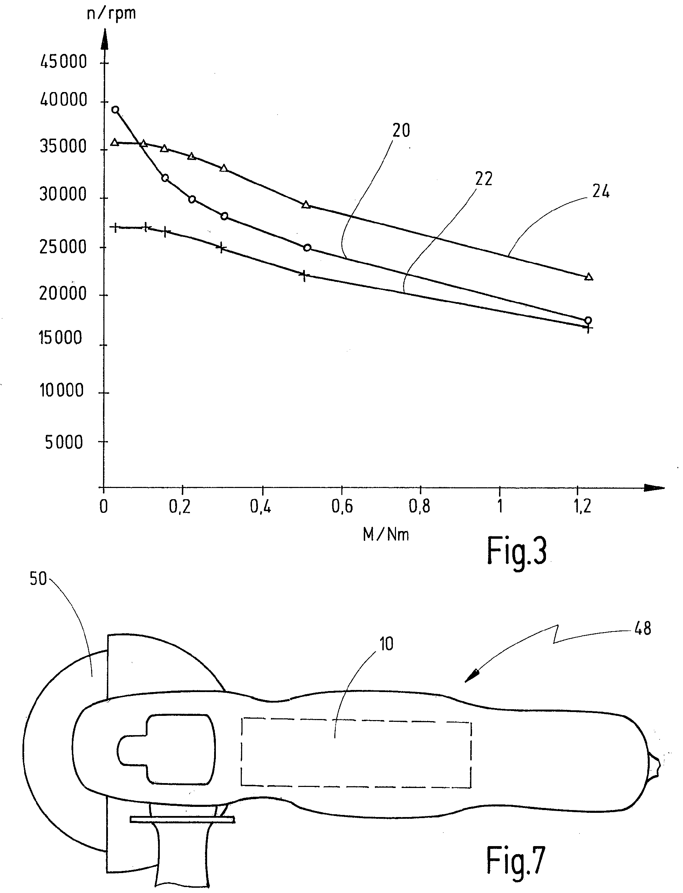

Die Auswirkung der Verwendung der Permanentmagnete wird im Folgenden anhand von Fig. 3 erläutert.

Fig. 3 zeigt in Kurve 20 die Drehzahl-Drehmoment-Charakteristik eines herkömmlichen Universalmotors (Nennleistung 1200 W für den vom Anmelder vertriebenen Winkelschleifer WSG 14) ohne die Verwendung von Permanentmagneten. Bei dem herkömmlichen Motor ergibt sich gemäß der Kurve 20 eine relativ starke Abhängigkeit der Drehzahl n (angegeben in Umdrehungen pro Minute) vom Drehmoment M (angegeben in Nm). Im Leerlauf ergibt sich eine Drehzahl von fast 40000 U/min, während die Drehzahl bei einer Belastung mit 1,2 Nm auf ca. 17500 U/min absinkt.

Die Kurve 22 zeigt die Auswirkung der Verwendung von je zwei Permanentmagneten 34 in symmetrischer Anordnung gemäß Fig. 4. Hierbei ergibt sich eine deutlich flachere Drehzahl-Drehmoment-Charakteristik gemäß der Kurve 22. Insbesondere sinkt die Leerlaufdrehzahl deutlich ab, auf einen Wert von etwa 27000 U/min, bei fast gleichbleibender Lastdrehzahl bei 1,2 Nm. Die Nennleistung beträgt in diesem Fall etwa 1100 W.

Die Kurve 24 zeigt, wie der sonst konstruktiv gleich ausgelegte Motor durch eine veränderte Wicklungscharakteristik vorteilhaft angepasst werden kann. Das Drehzahlniveau kann insgesamt wieder so angehoben werden, dass die Leerlaufdrehzahl einen höheren Wert annimmt, der aber noch unterhalb der Leerlaufdrehzahl des Motors ohne Permanentmagneten liegen kann und z.B. etwa 36000 U/min beträgt. Gleichzeitig steigt die Drehzahl bei sonst gleichem Drehmoment an, so dass sich bei insgesamt flacherem Verlauf der Drehzahl-Drehmoment-Kurve eine Verschiebung nach oben ergibt. Die Nennleistung steigt bei sonst gleichem Motoraufbau auf etwa 1400 W.

Bei dieser Ausführung kann also eine stärkere Getriebeuntersetzung verwendet werden, sofern der Motor etwa in einem Elektrowerkzeug 44 gemäß Fig. 7 eingesetzt wird.

Fig. 7 zeigt ein Elektrowerkzeug 48 in Form eines Winkelschleifers in schematischer Darstellung von oben. Das Elektrowerkzeug 48 weist einen Reihenschlussmotor 10 gemäß Fig. 1 auf, bei dem der Stator 26b gemäß Fig. 6 verwendet wird, so dass sich eine asymmetrische Anordnung der Permanentmagnete ergibt. Durch die Verwendung der Permanentmagnete und eine angepasste Wicklungsauslegung ergibt sich die Drehzahl-Drehmoment-Charakteristik gemäß Kurve 24 gemäß Fig. 3. Die Drehzahl der Schleifscheibe 50 wird somit auf eine maximal zulässige Umfangsgeschwindigkeit von z.B. 80 m/s begrenzt.

Fig. 2 zeigt eine nicht von der Erfindung umfasste Schaltung eines Reihenschlussmotors, der insgesamt mit 10a bezeichnet ist. Dieser Reihenschlussmotor 10a ist für eine Drehrichtungsumkehr ausgelegt und weist somit z.B. einen Stator 26 oder 26a gemäß der Figuren 4 oder 5 auf. Da die feldverstärkende Wirkung von Permanentmagneten und Hauptfeld auch bei Drehrichtungsumkehr erhalten bleiben soll, wird zur Drehrichtung die Stromrichtung des Ankers 12 umgekehrt. Hierzu ist beispielsweise ein zweipoliger Umschalter S₂ vorgesehen.

## Patentansprüche

1. Mittels Gleichspannung betreibbarer Reihenschlussmotor mit Vorzugsrichtung, mit einem Stator (26, 26a, 26b) und einem Anker (12), mit mindestens einer Feldwicklung (14, 16), die mit einer Ankerwicklung in Reihe geschaltet ist und mit mindestens zwei Permanentmagneten (34, 38 42), deren Magnetfeld dem durch die mindestens eine Feldwicklung (14, 16) erzeugten Hauptfeld überlagert ist, **dadurch gekennzeichnet, dass** die mindestens zwei Permanentmagnete (42), die an den Polschuhen (28, 30) asymmetrisch angeordnet sind, indem sie von der Polschuhmitte und der neutralen Zone (44) entgegen der Vorzugsrichtung des Ankers (12) verlagert sind.

2. Reihenschlussmotor nach Anspruch 1, **dadurch gekennzeichnet, dass** mindestens ein Permanentmagnet (34, 38, 42) in einer Nut eines Polschuhs aufgenommen ist.

3. Reihenschlussmotor nach Anspruch 1, **dadurch gekennzeichnet, dass** mindestens ein Permanentmagnet auf der Innenoberfläche eines Polschuhs aufgenommen ist.

4. Reihenschlussmotor nach einem der vorhergehenden Ansprüche, **dadurch gekennzeichnet, dass** mindestens ein Permanentmagnet eine derart hohe Feldstärke aufweist, dass eine durch die Anordnung des Permanentmagneten verursachte Feldschwächung zumindest ausgeglichen wird.

5. Reihenschlussmotor nach einem der vorhergehenden Ansprüche, **dadurch gekennzeichnet, dass** mindestens ein Permanentmagnet (34, 38, 42) aus einem Seltenerdwerkstoff besteht.

6. Reihenschlussmotor nach einem der vorhergehenden Ansprüche, **dadurch gekennzeichnet, dass** der Stator (26, 26a, 26b) mindestens zwei Polschule (28, 30) aufweist, an denen jeweils mindestens eine Nut (32, 36, 40) vorgesehen ist, in der ein Permanentmagnet (34, 38, 42) aufgenommen ist.

7. Reihenschlussmotor nach einem der Ansprüche 2 bis 6, **dadurch gekennzeichnet, dass** zumindest ein Permanentmagnet (34, 38, 42) in die Nut (32, 36, 40) in Axialrichtung einschiebbar ist.

8. Reihenschlussmotor nach einem der vorhergehenden Ansprüche, **dadurch gekennzeichnet, dass** sich zumindest ein Permanentmagnet (34, 38, 42) über die gesamte axiale Länge eines zugeordneten Polschuhs (28, 30) erstreckt.

9. Reihenschlussmotor nach einem der Ansprüche 1 bis 7, **dadurch gekennzeichnet, dass** sich zumindest ein Permanentmagnet nur über einen Teil der axialen Länge eines zugeordneten Polschuhs erstreckt.

10. Reihenschlussmotor nach einem der vorhergehenden Ansprüche, **gekennzeichnet durch** einen Brückengleichrichter (18) zur Speisung des Motors.

11. Reihenschlussmotor nach Anspruch 10, **dadurch gekennzeichnet, dass** der Brückengleichrichter (18) ferner Mittel zur Spannungsglättung umfasst.

12. Reihenschlussmotor nach einem der vorhergehenden Ansprüche, **dadurch gekennzeichnet, dass** zumindest ein Permanentmagnet (34, 38, 42) derart angeordnet ist, dass er dem Hauptfeld feldverstärkend überlagert ist.

13. Elektrowerkzeug mit einem Reihenschlussmotor nach einem der vorhergehenden Ansprüche, bei dem der Reihenschlussmotor derart ausgelegt ist, dass eine Begrenzung der Leerlaufdrehzahl auf einen zulässigen Maximalwert, insbesondere einen Wert von unterhalb von 40000 Umdrehungen pro Minute, gewährleistet ist.

14. Elektrowerkzeug nach Anspruch 13, das als Winkelschleifer (48) ausgebildet ist.

## Claims

1. A series-wound motor having a stator (26, 26a, 26b) and an armature (12), having at least one field winding (14, 16) which is connected in series with an armature winding, and having at least two permanent magnets (34, 38, 42), whose magnetic field is superimposed on the main field produced by the at least one field winding (14, 16), **characterized in that** at least two permanent magnets (42) are provided and are arranged asymmetrically on the pole shoes (28, 30), **in that** they are displaced from the pole shoe center and the neutral zone (44) into a direction opposite to the preferred direction of the armature (12).

2. The series-wound motor as claimed in claim 1, **characterized in that** the at least one permanent magnet (34, 38, 42) is held in a slot in a pole shoe.

3. The series-wound motor as claimed in claim 1, **characterized in that** the at least one permanent magnet is held on the inner surface of a pole shoe.

4. The series-wound motor as claimed in one of the preceding claims, **characterized in that** the at least one permanent magnet has a sufficiently high field strength that field weakening, which is caused by the arrangement of the permanent magnet, is at least compensated for.

5. The series-wound motor as claimed in one of the preceding claims, **characterized in that** the at least one permanent magnet (34, 38, 42) is composed of a rare-earth material.

6. The series-wound motor as claimed in one of the preceding claims, **characterized in that** the stator (26, 26a, 26b) has at least two pole shoes (28, 30), on each of which at least one slot (32, 36, 40) is provided, in which a permanent magnet (34, 38, 42) is held.

7. The series-wound motor as claimed in one of claims 2 to 6, **characterized in that** the at least one permanent magnet (34, 38, 42) can be inserted into the slot (32, 36,40) in the axial direction.

8. The series-wound motor as claimed in one of the preceding claims, **characterized in that** the at least one permanent magnet (34, 38, 42) extends over the entire axial length of an associated pole shoe (28, 30).

9. The series-wound motor as claimed in one of claims 1 to 7, **characterized in that** the at least one permanent magnet extends only over a part of the axial length of an associated pole shoe.

10. The series-wound motor as claimed in one of the preceding claims, **characterized in that** the motor is fed via a bridge rectifier (18).

11. The series-wound motor as claimed in claim 10, **characterized in that** the bridge rectifier (18) furthermore comprises means for voltage smoothing.

12. The series-wound motor as claimed in one of the preceding claims, **characterized in that** the at least one permanent magnet (34, 38, 42) is arranged such that it is superimposed on the main field, reinforcing the field.

13. An electrical tool having a series-wound motor as claimed in one of the preceding claims, wherein the series-wound motor is designed to ensure that the no-load rotation speed is limited to a maximum permissible value, in particular to a value below 40 000 revolutions per minute.

14. The electrical tool as claimed in claim 13, which is in the form of an angle grinder (48).

## Revendications

1. Moteur série pouvant être mis en fonctionnement au moyen d'une tension continue et présentant une direction préférentielle, comportant un stator (26, 26a, 26b) et un induit (12), au moins un enroulement de champ (14, 16) qui est connecté en série à un enroulement d'induit et au moins deux aimants permanents (34, 38, 42) dont le champ magnétique se superpose au champ principal généré par l'au moins un enroulement de champ (14, 16), **caractérisé en ce que** les au moins deux aimants permanents (42) sont disposés de manière asymétrique sur les pièces polaires (28, 30) en faisant en sorte qu'ils soient décalés par rapport au centre des pièces polaires et à la zone neutre (44) de manière opposée à la direction préférentielle de l'induit (12).

2. Moteur série selon la revendication 1, **caractérisé en ce qu'**au moins un aimant permanent (34, 38, 42) est reçu dans une rainure d'une pièce polaire.

3. Moteur série selon la revendication 1, **caractérisé en ce qu'**au moins un aimant permanent est reçu sur la surface intérieure d'une pièce polaire.

4. Moteur série selon l'une quelconque des revendications précédentes, **caractérisé en ce qu'**au moins un aimant permanent présente une intensité de champ suffisamment élevée pour qu'un affaiblissement de champ provoqué par l'agencement de l'aimant permanent soit au moins compensé.

5. Moteur série selon l'une quelconque des revendications précédentes, **caractérisé en ce que** l'au moins un aimant permanent (34, 38, 42) est constitué d'un matériau de terres rares.

6. Moteur série selon l'une quelconque des revendications précédentes, **caractérisé en ce que** le stator (26, 26a, 26b) comporte au moins deux pièces polaires (28, 30) sur lesquelles il est prévu au moins une rainure (32, 36, 40) dans laquelle est reçu ledit aimant permanent (34, 38, 42).

7. Moteur série selon l'une quelconque des revendications 2 à 6, **caractérisé en ce qu'**au moins un aimant permanent (34, 38, 42) peut être introduit en direction axiale dans la rainure (32, 36, 40).

8. Moteur série selon l'une quelconque des revendications 2 à 6, **caractérisé en ce qu'**au moins un aimant permanent (34, 38, 42) s'étend sur la totalité de la longueur axiale d'une pièce polaire (28, 30) associée.

9. Moteur série selon l'une quelconque des revendications 1 à 7, **caractérisé en ce que** l'au moins un aimant permanent ne s'étend que sur une partie de la longueur axiale d'une pièce polaire associée.

10. Moteur série selon l'une quelconque des revendications précédentes, **caractérisé par** un redresseur en pont (18) pour l'alimentation du moteur.

11. Moteur série selon la revendication 10, **caractérisé en ce que** le redresseur en pont (18) comprend en outre des moyens destinés à lisser la tension.

12. Moteur série selon l'une quelconque des revendications précédentes, **caractérisé en ce qu'**au moins un aimant permanent (34, 38, 42) est agencé de manière à ce qu'il se superpose en renforçant l'intensité de champ du champ principal.

13. Outil électrique comportant un moteur série selon l'une quelconque des revendications précédentes, dans lequel le moteur série est conçu de manière à assurer une limitation de la vitesse de ralenti à une valeur maximale admissible, notamment à une valeur inférieure à 40000 tours par minute.

14. Outil électrique selon la revendication 13, qui est réalisé sous la forme d'une meuleuse d'angle (48).
